# EUROPEAN PATENT SPECIFICATION

(11) **EP 2 000 911 B1**
(45) Date of publication and mention of the grant of the patent: **16.12.2009**
(21) Application number: 08153846.4
(22) Date of filing: 31.03.2008
(51) Int. Cl.: G06F 11/20

(54) **Computer system comprising at least two computers for continuous operation of said system**
Computersystem mit mindestens zwei Computern für den kontinuierlichen Betrieb dieses Systems
Système informatique comprenant au moins deux ordinateurs pour le fonctionnement en continu dudit système

(30) Priority: 04.06.2007 IT TO20070387
(43) Date of publication of application: 10.12.2008
(73) Proprietor: Reven.GE@S.R.L., Torino (IT)
(72) Inventor: Dalporto, Baldo Umberto, 10141, Torino (IT)
(74) Representative: Dini, Roberto

(56) References cited:
- WO-A-2007/077585
- US-A- 5 812 751
- US-A1- 2005 005 062
- US-A1- 2005 159 927
- US-B1- 6 363 497

## Description

The present invention relates to a computer system of the type comprising at least two computers.

More in particular, the present invention relates to a computer system comprising at least two computers, in particular two servers, connected to each other in such a manner as to appear as a single unit to an external user.

The present invention also relates to a method for continuous operation of a computer system comprising at least two computers.

The growing importance of "Information Technology" infrastructures has led to an increasing need for systems capable of ensuring highly reliable inbound and outbound services, beginning from servers. The reliability of a system is related to its capability of restoring or maintaining its normal operation when a fault occurs, e.g. a failure or malfunction of any of its components or other components connected thereto, whether hardware or software, and of ensuring a certain degree of data congruence in such a situation.

In the past, and to some extent still today, the need for highly reliable servers always clashed with the complexity of the hardware and software required and with the purchase and maintenance costs thereof.

In recent years, conventional "single server" systems, i.e. systems using a single server, have been significantly improved in terms of capability of withstanding some kinds of malfunctions. By introducing redundant power supply and cooling subsystems, data protection mechanisms with RAID (Redundant Array of Independent Disks) technology, and "intelligent" memory and processor management systems, the manufacturers have tried to limit the damage caused by failures of delicate parts.

However, in spite of all this technological advance, a single server is still subject to many risks of failure or malfunction, which may prevent services from being provided. The most serious limitation is that it is not possible to foresee the time required for restoring the normal operation of the system. As a matter of fact, said time in turn depends on assistance times, which may vary according to daytime or night time, whether the day of occurrence is a workday or a holiday, and depending on the distance that the operator or technician must cover to reach the installation site. The risk is further augmented by the time required for obtaining any necessary spare parts, also considering that this technology is evolving rapidly and some components often become difficult to find on the market after just a few years. For this reason, some companies decide - somewhat paradoxically - to purchase two complete servers, one of which is kept as a spare server for emergency situations.

Another conventional approach to the problem of providing a highly reliable system is the cluster technology. The cluster technology allows to join together two or more servers, which must necessarily be equal, within a single logic unit. However, the complexity and cost of a cluster having more than two nodes are such that this configuration will not even be taken into consideration herein.

From a physical point of view, all servers (nodes) belonging to a cluster are connected together through a dedicated connection, typically a LAN, and can access the same disk pools, e.g. with SCSI SATA / ATA or Fiber Channel technology. All nodes have one local disk or two Raid 1 (mirroring) disks, not shared among them, which host the operating system and applications, or a part thereof, while user data is stored in the shared pool.

With the cluster technology, resources like network name, IP address, applications, services and disk space are virtualized. These virtual units can be active on one cluster node only, and are moved automatically from one node to another when a malfunction occurs or when maintenance work must be carried out.

The users of the services are automatically directed to the node where the corresponding virtual units are located. There are also special applications which operate simultaneously on both nodes of the cluster.

A cluster solves the reliability issue from a continuity point of view ("business continuity"), but it cannot solve the problem of continuous processing: when a node fails, in fact, all tasks running on that node will stop, with serious consequences such as the disconnection of all connected users. The services are then moved to another node, where they will be activated in the same way as they are activated at server start-up. All of the most common operating systems offer cluster options having similar functionality: among these options, the one provided by Microsoft® is the most known and widespread; this is why it has been used for the examples contained herein.

A cluster solution represents a big quality jump with respect to a single server solution as far as technology is concerned, but it has nonetheless a number of critical points. The cost of the operating system and of the clustering software is very high, being more than five times the cost of the software required for a single server; setup costs are also higher, since this is quite a delicate operation. Management costs are high as well, due to the complexity and delicacy involved in the management of two nodes, wherein a single mistake could cause the loss of all user data. Therefore, the solution to these problems is not within the grasp of a typical system administrator.

In addition to the above-mentioned drawback related to excessive costs, the cluster also suffers from a limitation due to the fact that the user data and application data is stored in a pool of disks which can be viewed directly (DAS) from any node through an SCSI or Fiber Channel bus. The failure of any component connected to this bus may block the entire bus and therefore the whole cluster ("single point of failure").

Moreover, one disk of the cluster pool is used as a "quorum disk", and contains everything that is needed to ensure the proper operation of the cluster itself. Should data on this disk become corrupted, the whole cluster will be blocked ("single point of failure").

The object of the present invention is to provide a computer system which is less costly in comparison with conventional cluster systems, while at the same time being more reliable than the aforementioned single server systems.

Therefore, the present invention discloses a computer system as described in claim 1. The features which are defined in the preamble of claim 1 are disclosed in the closest prior art document US-A-5 812 751. Preferred embodiments of the system according to the invention are set out in the dependent claims 2 to 14.

To better understand the invention and to fully appreciate the advantages thereof , a number of non-limiting examples of embodiment of the invention will be described below with reference to the annexed drawings, wherein:
- Fig. 1 schematically shows an example of embodiment of a computer system according to the invention comprising two computers, in particular two servers;
- Fig. 2 is a perspective view of the assembled computer system of Fig. 1;
- Fig. 3 shows an operating diagram of the functional states of the computer system of Fig. 1.

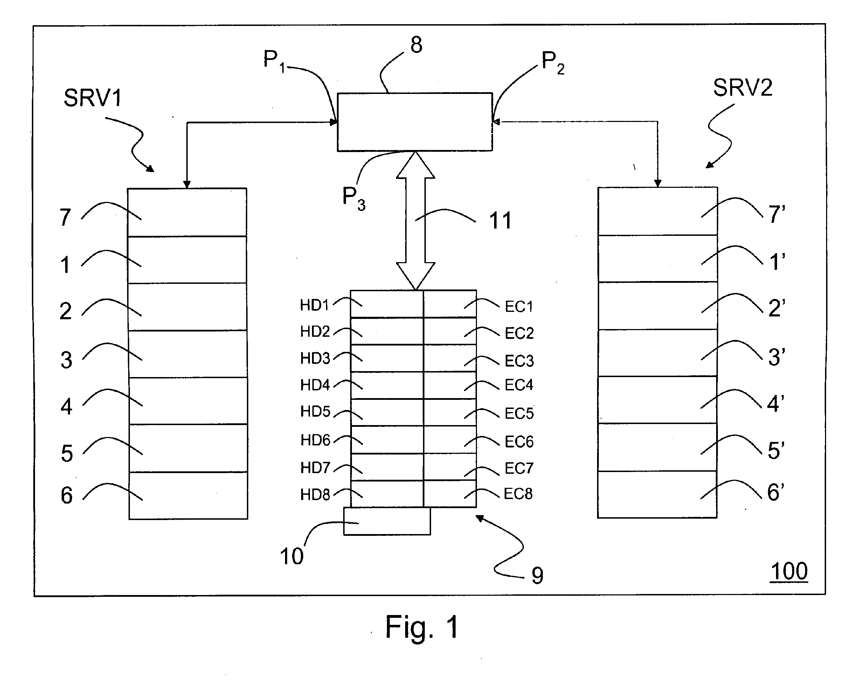

Fig. 1 shows a diagram of a computer system 100 according to an embodiment of the invention. Computer system 100 comprises at least a first server SRV1 and a second server SRV2 connected to first server SRV1, thus appearing as a single unit to an external user of the system. It should be noted that, even though the teachings of the invention are particularly suited to server systems, they are also applicable to other types of electronic computers, to which the level of reliability thus obtained may turn out to be useful as well.

According to the described example, first server SRV1 is of a per se conventional type and comprises a first motherboard 1, a first control and processing unit 2, a first memory 3, e.g. a RAM memory, and a first RAID type controller module 4, RAID being the acronym of "Redundant Array of Independent Disks".

For instance, motherboard 1 may be an Intel SE7320EP2 board capable of loading a conventional BIOS (Basic Input/Output System) such as, for example, an AMI BIOS. As known, a BIOS is software determining the operations that the respective computer can execute without accessing to disk-resident applications.

As is apparent to those skilled in the art, the RAID controller module 4 is devoted to disk management; it also clears any failure situations through reorganization of the disks.

Furthermore, first server SRV1 also includes a first LAN interface module 5 which allows server SRV1 to access a LAN (Local Area Network) and then an external network such as an Internet network.

Fig. 1 also diagrammatically shows a first power unit 6, such as a power supply connected to a public power mains, used for supplying server SRV1 with the proper power voltage. Said first power unit 6 can be controlled through appropriate signals in order to cut off the power to server SRV1, thus turning it off.

First server SRV1 is also provided with a first electronic management block 7 to which, as detailed below, a part of the management of any faults or failures in the system 100 is assigned. Advantageously, first electronic management block 7 consists of hardware modules and, for example, integrated logic circuits, which are more reliable than software modules.

Second server SRV2 can be provided in the same way as first server SRV1. Therefore, second server SRV2 may comprise modules and blocks which are analogous to the corresponding components of first server SRV1; they are indicated in Fig. 1 by the same reference numerals used for first server SRV1, with the addition of an apostrophe " ' ". It should be noted that both servers SRV1 and SRV2 are independent of each other, and that only one at the time can operate.

Computer system 100 also comprises an interconnection module 8 having a first input port P1 connected to first server SRV1, in particular to first management block 7, a second port P2 connected to second server SRV2, in particular to second management block 7', and a third port P3 connected to a storage block 9.

For example, interconnection module 8 is an INFINIBAND technology connection which allows both first server SRV1 and second server SRV2 to access storage block 9. The exchange of signals of different types between first management block 7 and second management block 7', and thus between two servers SRV1,SRV2, is implemented through a dedicated LAN which communicates with an RS232 serial interface provided on each server SRV1,SRV2.

Storage block 9 comprises memory modules, e.g. comprising hard disks, wherein the data of system 100 is stored. The example of Fig. 1 diagrammatically shows a pool of eight hard disks HD1-HD8 capable of storing at least the operating system, e.g. on a first hard disk HD1, which can be loaded by each of two servers SRV1,SRV2, as well as any other software applications or data which can be used by servers SRV1,SRV2 themselves.

By way of example, first hard disk HD1 may store the following operating systems: Microsoft Windows Server 2003 Enterprise Edition, Microsoft Windows 2000 Advanced Server, Red Hat Linux Enterprise, SUSE LINUX Enterprise Server and Novell Netware.

Advantageously, every memory module of storage block 9 is provided with a disk management module EC1-EC8, such as an electronic circuit implementing a control logic, which handles the respective hard disk HD1-HD8. For example, hard disks HD1-HD8 may be SATA or SAS technology units, in particular being HDU SATA II disks; they are mounted into a respective hot-swap type tray together with the respective disk management module EC1-EC8.

It is important to remark that the pool of disks HD1-HD8 is not proprietary to one server SRV1,SRV2, being on the contrary common to both servers SRV1,SRV2; however, it may only be accessed by one server SRV1,SRV2 at a time. Furthermore, the pool of disks HD1-HD8 is provided with a respective redunded power unit 10.

Storage block 9 is connected to third port P3 of the interconnection block through an Infiniband connection.

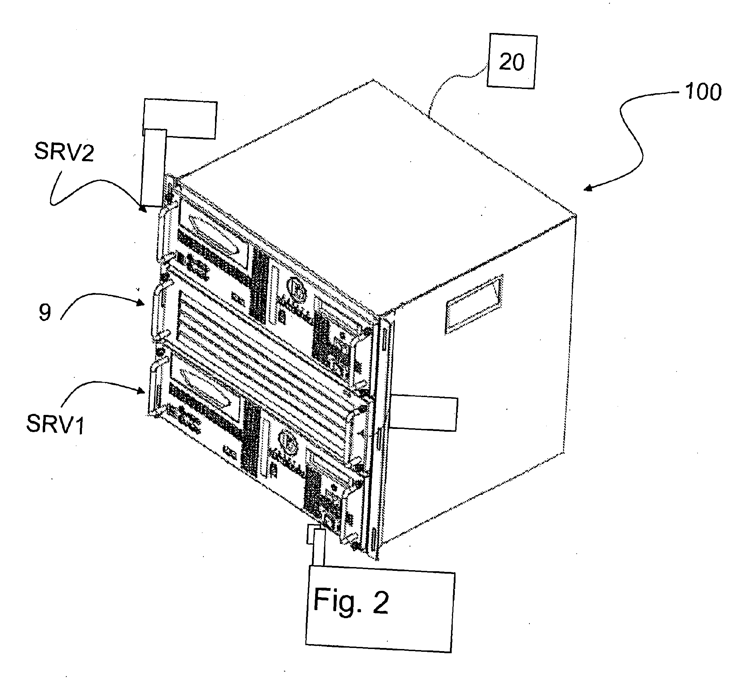

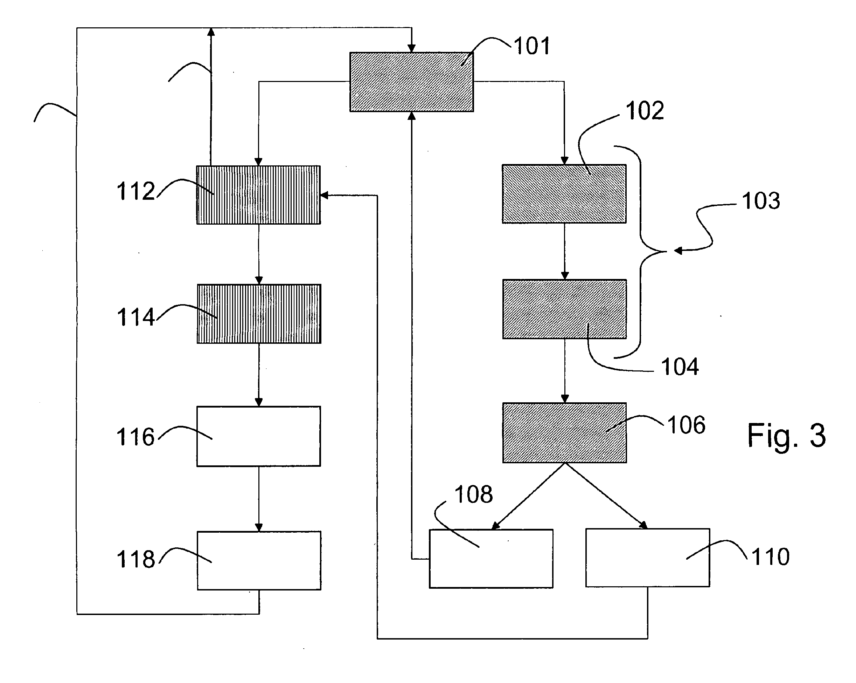

With reference to Fig. 2, computer system 100 may, as far as its external structure is concerned, be equipped with a single chassis 20 housing first server SRV1, second server SRV2 and storage module 9. In addition, each server SRV1,SRV2 may be fitted with an Infiniband backplane acting as an interconnection module 8.

Furthermore, both first server SRV1 and second server SRV2 are provided with a respective application for troubleshooting servers SRV1,SRV2. In particular, each motherboard 1,1' of the respective server SRV1,SRV2 can process a per se conventional "watch-dog" software application, thus being able to detect the occurrence of any anomalous events, such as a failure, in the other server SRV2,SRV1. With this type of application, which may be analogous to the one implemented in prior-art cluster servers, one or the other server SRV1,SRV2 periodically sends a polling or monitoring signal to the other server SRV2,SRV1. If no response is received to the polling signal, server SRV1,SRV2 which sent said signal can infer that a fault has occurred in the other server SRV2,SRV1.

The detectable malfunctions or failures are of different type and may include, for example: malfunction of a CPU 2,2' of servers SRV1, SRV2, failure of a server SRV1, SRV2, failure of a hard disk HD1-HD8, failure of a RAID control module 4,4', failure of a power unit 6,6' or 10, operating system hang, connection hang, disconnected cables, breakdown hub port, malfunction of a user-definable application.

Below an example of operation of computer system 100 will be described with reference to Fig. 3.

During a start-up step, not shown, both first server SRV1 and second server SRV2 are turned on and therefore receive power from the respective power units 6,6'.

As a consequence of start-up, both servers SRV1,SRV2 load the respective BIOS. In addition, system 100 is so set up that only one of two servers SRV1,SRV2, e.g. first server SRV1, can access and control storage block 9 through interconnection module 8, thus having access to the contents of hard disks HD1-HD8.

Therefore, first server SRV1 has access to first disk HD1 and loads the operating system, thus entering an active state 112. In said active state 112, first server SRV1 can access all disks in storage block 9 in order to use any software applications residing therein and to process them through its own control and processing unit 2 in a conventional manner.

On the contrary, after having loaded the BIOS, second server SRV2 does not access to storage block 9 and will not load the operating system, thus entering a stand-by state 104.

The different behaviour of two servers SRV1 and SRV2 after start-up, i.e. access enabled or denied to storage block 9, is imposed by respective management block 7 and 7'.

During the normal operation of first server SRV1, second server SRV2 in monitoring state 106 sends polling signals, through its own watch-dog application, to the watch-dog application of first server SRV1 (monitoring state 114), so that any fault conditions of first server SRV1 can be detected. Said polling signals are sent by second server SRV2 to interconnection block 8 and then to first server SRV1. Moreover, each disk management block EC1-EC8 sends signals to and receives signals from first server SRV1 through interconnection block 8.

If an anomalous event is detected in first server SRV1, the system 100 will deny access to and control of storage block 9 to first server SRV1, while at the same time will enable access to second server SRV2.

In particular, the access to the storage block to server SRV1 is denied by advantageously turning off first server SRV1 itself. More in detail, management block 7 is informed about the fault by the watch-dog of first server SRV1 and, by acting on power unit 6, it controls the switching in such a way as to cut off the voltage supply to first server SRV1 (state 116). Subsequently server SRV1 will enter state 118, from which it will return to its initial state 101.

Furthermore, by allowing second server SRV2 to access storage block 9, said server is forced to reboot, i.e. to load the operating system from first hard disk HD1 (state 110), and to enter an active state 102, thus taking full control of storage block 9. The step of transferring the storage block control to second server SRV2 is handled by second management block 7'.

At this point, second server SRV2, which now has access to storage block 9, can read or update the data previously stored therein by first server SRV1 and process the applications residing in said block 9 as necessary. Thus, the faulty system condition caused by the failure occurred in first server SRV1 will be cleared as soon as second server SRV2 has completed the reboot sequence, since computer system 100 can continue to operate.

Should the faulty condition of server SRV1 be solved, the control of system 100 will return to server SRV1 (state 108).

It should be noted that states 101, 104 and 106 are represented by a rectangle filled with right-slanted lines, state 102 is represented by a rectangle filled with left-slanted lines, and states 112 and 114 are represented by a rectangle filled with vertical lines. This corresponds to a signalling system which can be seen externally by a user of computer system 100, thus providing said user with a visual indication of the state of operation of two servers SRV1,SRV2. For example, right-slanted lines correspond to a LED's first blinking frequency, left-slanted lines correspond to a LED's second blinking frequency, which is different and higher than the first one, and vertical lines correspond to an illuminated LED.

It is important to remark that the transfer of the control of block 9 for the storage of system resource(i.e. not just of a specific disk) from a server SRV1,SRV2 to another server SRV2,SRV1 is clearly in contrast with the way cluster servers operate, which on the contrary transfer said resources from one server to another.

It should be noted that both first server SRV1 and second server SRV2 are identified by the same IP address. Therefore, an external user contacting system 100 through a client computer will not be affected by the above-described procedure for transferring the resource control from one server to the other.

For the purpose of preventing an undesired failure of one or both managements blocks 7 and 7' from causing both servers SRV1 and SRV2 to be connected to storage block 9, it has been advantageously provided that the disk management modules EC1-EC8 cause hard disks HD-HD8 to connect to servers SRV1,SRV2 selectively through interconnection module 8, i.e. they connect to only one server SRV1,SRV2 in any operating condition.

It should be noted that, even though reference has been made in the above description to just two servers SRV1,SRV2, the teachings of the present invention are also applicable to a larger number of servers, wherein one or more servers are normally in the active state and the other servers are in the stand-by state, i.e. a state in which only the BIOS has been loaded. Said normally active servers are turned off as a consequence of the detection of one or more faults in the same way as described above.

Computer system 100 turns out to be particularly suited to the following applications: File Server, Application Server, Mail Server, Back End Server, Front End Parallel Processing, Internet Security, VideoSurveillance, Storage Server and CTI (Computer Telephony Integration).

The invention offers several advantages in comparison with conventional systems, in particular with high-reliability cluster server systems. In particular, the above-described computer system 100 is less costly than normal cluster servers, while at the same time offering levels of performance in terms of response time, which is dependent on the reboot time of the server to be brought into the active state, which are similar to those provided by conventional clusters.

The lower costs of the computer system according to the invention is due to the fact that it does not require the purchase of software (operating system or application) dedicated to the management of the cluster mode, nor does it require that the same software be purchased for both servers.

The Applicant has experimentally demonstrated that the response time of system 100 following the detection of a fault is within approximately 120 s. Furthermore, the types of detectable faults are not fewer than those which can be detected by cluster servers, as the same software applications may be used.

Another advantage is offered by the use of distributed management blocks (such as blocks 7 and 7' and EC1-EC8) which are preferably provided as hardware, thus ensuring a higher degree of reliability compared with a software management module while not requiring the risky use of a quorum disk containing all system management modes, unlike cluster servers.

The computer system comprising at least two computers and the related method for continuous operation of said system described herein by way of example may be subject to many possible variations without departing from the scope of the inventive idea; it is also clear that in the practical implementation of the invention the illustrated details may have different shapes or be replaced with other technically equivalent elements.

It can therefore be easily understood that the present invention is not limited to the above-described computer system comprising at least two computers and the related method for continuous operation for said system, but may be subject to many modifications, improvements or replacements of equivalent parts and elements without departing from the scope of the inventive idea, as clearly specified in the following claims.

## Claims

1. Computer system (100) comprising at least a first computer (SRV1), a second computer (SRV2) connected to said first computer (SRV1), and a block (9) for the storage of system resources, said system additionally comprising a management block (7, 7') which can selectively set said system (100) to a first configuration, wherein access to said storage block (9) is enabled to said first computer (SRV1) and not enabled to said second computer (SRV2), or to a second configuration, wherein access to said storage block (9) is enabled to said second computer (SRV2) and not enabled to said first computer (SRV1), said management block (7,7') allowing said first configuration to be switched to said second configuration when an operation fault is detected in said first computer (SRV1), **characterised in that** said system additionally comprises between said computers (SRV1, SRV2) and said storage block (9) an interconnection module (8) which allows said storage block (9) to be accessed by said first and second computers (SRV1, SRV2), and **in that** said management block (7, 7') comprises a first hardware sub-block (7) associated with said first computer (SRV1) and a second hardware sub-block (7') associated with said second computer (SRV2), each of said sub-blocks (7,7') being capable of sending/receiving signals to/from the respective computer (SRV1, SRV2) and to/from each other through a dedicated LAN connection which communicates with an RS232 serial interface provided on each of said computers (SRV1, SRV2).

2. System (100) according to claim 1, **characterized in that** in said first configuration said first computer (SRV1) enters an active state wherein it is able to access said storage block (9) in order to use at least one application residing in said storage block (9), and said second computer (SRV2) enters a stand-by state wherein it cannot use said at least one application residing in said storage block (9).

3. System (100) according to claim 2, wherein, when a fault is detected in said first computer (SRV1), said management block (7, 7') can generate signals in order to carry out the following operations:
- turning off said first computer (SRV1) by cutting off the power supplied thereto;
- bringing said second computer (SRV2) from the stand-by state to a respective active state wherein it can access said storage block (9) in order to use said at least one application.

4. System (100) according to claim 1, **characterized in that** said interconnection module (8) uses Infiniband technology.

5. System (100) according to claim 2, **characterized in that**, in order to bring said first computer (SRV1) into said active state, said first computer (SRV1) loads the respective BIOS and has access to said storage block (9) to load an operating system, said second computer (SRV2) in the stand-by state loads the respective BIOS but cannot load the operating system and, during its transition from the stand-by state to the active state, said second computer carries out a reboot operation loading the operating system.

6. System (100) according to claim 1, **characterized in that** said first computer (SRV 1) and second computer (SRV2) have the same IP address.

7. System (100) according to at least one of the preceding claims, **characterized in that** a respective troubleshooting software application is resident in each of said computers (SRV1, SRV2), so that said second computer in the stand-by state sends polling signals to said first computer (SRV1) in the active state, a fault being detected when said first computer (SRV1) in the active state sends no signal in response to said polling signal.

8. System (100) according to claim 1, **characterized in that** said fault comprises at least one of the following conditions pertaining to each of said computers (SRV1,SRV2): faulty processor module of said computers (SRV1,SRV2), failure of the active computer (SRV1,SRV2), failure of a RAID control module (4), operating system hang, connection hang, disconnected cable, faulty hub port, application malfunction.

9. System (100) according to claim 1, **characterized in that** each of said computers (SRV1,SRV2) comprises: a motherboard (1, 1'), a control and processing unit (2, 2'), a memory (3,3'), a RAID control module (4, 4'), a LAN interface (5, 5') and a power unit (6, 6').

10. System (100) according to claim 1, **characterized in that** said storage block (9) comprises a plurality of independent hard disks (HD1-HC8), each being associated with a respective control module (EC1-EC8) adapted to allow said computers (SRV1,SRV2) to access the respective hard disk (HD1-HC8) selectively.

11. System (100) according to claim 1, **characterized by** comprising an external chassis (20) adapted to house said first computer (SRV1), and said second computer (SRV2), said storage module (9) and said interconnection module (8).

12. System (100) according to at least one of the preceding claims, **characterized in that** said first computer (SRV1) and second computer (SRV2) are provided through a respective server.

13. System (100) according to claim 12, **characterized by** being adapted to operate in at least one of the following applications: File Server, Application Server, Mail Server, Back End Server, Front End Parallel Processing, Internet Security, VideoSurveillance, Storage Server and CTI (Computer Telephony Integration).

14. System according to any of the preceding claims, **characterized in that** said first computer (SRV1) and second computer (SRV2) are provided with a respective signalling system, in particular LEDs, adapted to allow a user of said system to recognize the state of operation of said first computer (SRV1) and second computer (SRV2).

## Patentansprüche

1. Computersystem (100) umfassend wenigstens einen ersten Computer (SRV1), einen zweiten Computer (SRV2), der mit dem ersten Computer (SRV1) verbunden ist, und einen Block (9) zum Speichern von Systemressourcen, wobei das System zusätzlich einen Management-Block (7, 7') aufweist, der selektiv das System (100) in eine erste Konfiguration versetzen kann, in der Zugriff auf den Speicherblock (9) dem ersten Computer (SRV1) ermöglicht wird und dem zweiten Computer (SRV2) nicht ermöglicht wird, oder in eine zweite Konfiguration versetzen kann, in der ein Zugriff auf den Speicherblock (9) dem zweiten Computer (SRV2) ermöglicht wird und dem ersten Computer (SRV1) nicht ermöglicht wird, wobei der Management-Block (7, 7') der ersten Konfiguration ermöglicht, in die zweite Konfiguration gewechselt zu werden, wenn ein Betriebsfehler in dem ersten Computer (SRV1) detektiert wird, **dadurch gekennzeichnet, dass** das System zusätzlich zwischen den Computern (SRV1, SRV2) und dem Speicherblock (9) ein Verbindungsmodul (8) aufweist, das dem Speicherblock (9) ermöglicht, dass auf ihn durch den ersten und zweiten Computer (SRV1, SRV2) zugegriffen werden kann, und dass der Management-Block (7, 7') einen ersten Hardware-Unterblock (7) aufweist, der dem ersten Computer (SRV1) zugeordnet ist, und einen zweiten Hardware-Unterblock (7'), der dem zweiten Computer (SRV2) zugeordnet ist, wobei jeder der Unterblöcke (7, 7') dazu in der Lage ist, mittels einer geeigneten LAN-Verbindung, die mit einem seriellen RS232-Interface kommuniziert, das an jedem der Computer (SRV1, SRV2) vorgesehen ist, Signale dem entsprechenden Computer (SRV1, SRV2) und sich gegenseitig zu senden bzw. Signale von dem entsprechenden Computer (SRV1, SRV2) und voneinander zu empfangen.

2. System (100) nach Anspruch 1, **dadurch gekennzeichnet, dass** in der ersten Konfiguration der erste Computer (SRV1) in einen aktiven Zustand eintritt, in dem er in der Lage ist, auf den Speicherblock (9) zuzugreifen, um wenigstens eine Anwendung zu verwenden, die in dem Speicherblock (9) vorhanden ist, und der zweite Computer (SRV2) in einen Stand-by-Zustand eintritt, in dem er nicht die wenigstens eine Anmeldung benutzen kann, die in dem Speicherblock (9) vorhanden ist.

3. System (100) nach Anspruch 2, wobei für den Fall, wenn eine Fehlfunktion in dem ersten Computer (SRV1) erfasst wird, der Management-Block (7, 7') Signale generieren kann, um die folgenden Operationen auszuführen:
- Ausschalten des ersten Computers (SRV1) durch Unterbrechen der Energiezufuhr zu diesem;
- Bringen des zweiten Computers (SRV2) aus dem Stand-by-Zustand in einen entsprechenden aktiven Zustand, in dem dieser auf den Speicherblock (9) zugreifen kann, um diese wenigstens eine Anwendung zu nutzen.

4. System (100) nach Anspruch 1, **dadurch gekennzeichnet, dass** das Verbindungsmodul (8) die Infiniband-Technologie verwendet.

5. System (100) nach Anspruch 2, **dadurch gekennzeichnet, dass** dazu, um den ersten Computer (SRV1) in den aktiven Zustand zu bringen, der erste Computer (SRV1) das entsprechende BIOS lädt und Zugriff auf den Speicherblock (9) hat, um ein Betriebssystem zu laden, wobei der zweite Computer (SRV2) in dem Stand-by-Zustand das entsprechende BI-OS lädt, aber nicht das Betriebssystem laden kann und wobei während seines Übergangs von dem Stand-by-Zustand zu dem aktiven Zustand der zweite Computer eine Reboot-Operation ausführt und das Betriebssystem lädt.

6. System (100) nach Anspruch 1, **dadurch gekennzeichnet, dass** der erste Computer (SRV1) und der zweite Computer (SRV2) dieselbe IP-Adresse haben.

7. System (100) nach wenigstens einem der vorstehenden Ansprüche, **dadurch gekennzeichnet, dass** eine entsprechende Fehlerdiagnose-Softwareanwendung in jedem der Computer (SRV1, SRV2) beherbergt ist, so dass der zweite Computer in dem Stand-by-Zustand Abrufsignale bzw. Polling-Signale dem ersten Computer (SRV1), der sich im aktiven Zustand befindet, sendet, wobei eine Fehlfunktion erfasst wird, wenn der erste Computer (SRV1) im aktiven Zustand kein Signal als Antwort auf das Abrufsignal sendet.

8. System (100) nach Anspruch 1, **dadurch gekennzeichnet, dass** die Fehlfunktion wenigstens einen der folgenden Betriebszustände umfasst, die jeden der Computer (SRV1, SRV2) betreffen: Fehlerhaftes Prozessormodul der Computer (SRV1, SRV2), Ausfall des aktiven Computers (SRV1, SRV2), Ausfall eines RAID-Steuermoduls (4), Stillstand des Betriebssystems, Verbindungsstillstand, getrenntes Kabel, fehlerhafter Netzknotenanschluss (engl.: faulty hub port), Anwendungsfehlfunktion.

9. System (100) nach Anspruch 1, **dadurch gekennzeichnet, dass** jeder der Computer (SRV1, SRV2) ein Motherboard (1, 1'), eine Steuer- und Prozesseinheit (2, 2'), einen Speicher (3, 3'), ein RAID-Steuer-Modul (4, 4'), ein LAN-Interface (5, 5') und eine Versorgungseinheit (6, 6') aufweist.

10. System (100) nach Anspruch 1, **dadurch gekennzeichnet, dass** der Speicherblock (9) mehrere unabhängige Festplatten (HD1-HC8) umfasst, von denen jede einem entsprechenden Steuermodul (EC1-EC8) zugeordnet ist, die dazu vorbereitet sind den Computern (SRV1, SRV2) den Zugriff auf die entsprechende Festplatte (HD1-HC8) selektiv zu ermöglichen.

11. System (100) nach Anspruch 1, **dadurch gekennzeichnet, dass** es ein externes Gehäuse (engl.: chassis) (20) umfasst, das dazu vorbereitet ist, den ersten Computer (SRV1) und den zweiten Computer (SRV2), das Speichermodul (9) und das Verbindungsmodul (8) aufzunehmen.

12. System (100) nach wenigstens einem der vorstehenden Ansprüche, **dadurch gekennzeichnet, dass** der erste Computer (SRV1) und der zweite Computer (SRV2) durch einen entsprechenden Server bereitgestellt werden.

13. System (100) nach Anspruch 12, **dadurch gekennzeichnet, dass** es dazu vorbereitet ist, in wenigstens einem der folgenden Anwendungen zu arbeiten: File Server, Anwendungsserver, Mailserver, Ausgangsserver bzw. Back End Server(engl.: Back End Server), Eingangsparallelbearbeitung bzw. Front End Parallel Prozessing (engl.: Front End Parallel Processing), Internetsicherheit, Videoüberwachung, Speicherserver und CTI (computerunterstützte Telefonintegration; engl.: Computer Telephony Integration).

14. System nach einem der vorstehenden Ansprüche, **dadurch gekennzeichnet, dass** der erste Computer (SRV1) und der zweite Computer (SRV2) mit einem entsprechenden Signalisierungssystem, insbesondere LEDs versehen ist, das dazu vorbereitet ist, einem Benutzer des Systems zu ermöglichen, den Betriebszustand des ersten Computers (SRV1) und des zweiten Computers (SRV2) zu erkennen.

## Revendications

1. Système informatique (100) comprenant au moins un premier ordinateur (SRV1), un second ordinateur (SRV2) connecté au dit premier ordinateur (SRV1), et un bloc (9) permettant le stockage des ressources du système, ledit système comprenant, de plus, un bloc de gestion (7, 7') qui peut établir, de façon sélective, ledit système (100) dans une première configuration, dans laquelle un accès au dit bloc de stockage (9) est validé pour ledit premier ordinateur (SRV1) et non validé pour ledit second ordinateur (SRV2), ou dans une seconde configuration dans laquelle un accès au dit bloc de stockage (9) est validé pour ledit second ordinateur (SRV2) et non validé pour ledit premier ordinateur (SRV1), ledit bloc de gestion (7, 7') permettant à ladite première configuration d'être commutée vers ladite seconde configuration lorsqu'un défaut de fonctionnement est détecté dans ledit premier ordinateur (SRV1), **caractérisé en ce que** ledit système comporte, de plus, entre lesdits ordinateurs (SRV1,SRV2) et ledit bloc de stockage (9) un module d'interconnexion (8) qui permet au dit bloc de stockage (9) d'être accessible pour lesdits premier et second ordinateurs (SRV1, SRV2), et **en ce que** ledit bloc de gestion (7, 7') comporte un premier sous-bloc matériel (7) associé au dit premier ordinateur (SRV1) et un second sous-bloc matériel (7') associé au dit second ordinateur (SRV2), chacun desdits sous-blocs (7, 7') étant capable d'émettre et de recevoir des signaux vers et à partir de l'ordinateur respectif (SRV1, SRV2) et vers et à partir de l'un l'autre par l'intermédiaire d'une connexion LAN (de réseau local) spécialisée qui communique avec une interface série RS232 prévue sur chacun desdits ordinateurs (SRV1, SRV2).

2. Système (100) selon la revendication 1, **caractérisé en ce que** dans ladite première configuration, ledit premier ordinateur (SRV1) entre dans un état actif dans lequel il est capable d'accéder au dit bloc de stockage (9) afin d'utiliser au moins une application résidant dans ledit bloc de stockage (9), et ledit second ordinateur (SRV2) entre dans un état de veille dans lequel il ne peut pas utiliser ladite au moins une application résidant dans ledit bloc de stockage (9).

3. Système (100) selon la revendication 2, dans lequel, lorsqu'un défaut est détecté dans ledit premier ordinateur (SRV1), ledit bloc de gestion (7, 7') peut générer des signaux afin de réaliser les opérations suivantes :
- fermer ledit premier ordinateur (SRV1) en coupant la puissance qui lui est fournie ;
- faire passer ledit second ordinateur (SRV2) de l'état de veille à un état actif respectif dans lequel il peut avoir accès au dit bloc de stockage (9) afin d'utiliser ladite au moins une application.

4. Système (100) selon la revendication 1, **caractérisé en ce que** ledit module d'interconnexion (8) utilise une technologie de Bande Infinie.

5. Système (100) selon la revendication 2, **caractérisé en ce que**, afin de faire passer ledit premier ordinateur (SRV1) à l'état actif, ledit premier ordinateur (SRV1) charge le BIOS (Système de Base d'Entrée/Sortie) respectif et a accès au dit bloc de stockage (9) afin de charger un système d'exploitation, ledit second ordinateur (SRV2) à l'état de veille charge le BIOS respectif mais ne peut pas charger le système d'exploitation et, pendant sa transition de l'état de veille à l'état actif, ledit second ordinateur exécute une opération de réamorçage chargeant le système d'exploitation.

6. Système (100) selon la revendication 1, **caractérisé en ce que** ledit premier ordinateur (SRV1) et ledit second ordinateur (SRV2) ont la même adresse IP (Protocole Internet).

7. Système (100) selon au moins l'une des revendications précédentes, **caractérisé en ce qu'**une application logicielle respective de localisation des pannes se trouve en résidence dans chacun desdits ordinateurs (SRV1, SRV2) de sorte que ledit second ordinateur à l'état de veille émet des signaux d'invitation à émettre vers ledit premier ordinateur (SRV1) qui est à l'état actif, un défaut étant détecté lorsque ledit premier ordinateur (SRV1) à l'état actif ne transmet pas de signal en réponse au dit signal d'invitation à émettre.

8. Système (100) selon la revendication 1, **caractérisé en ce que** ledit défaut comporte au moins l'une des situations suivantes appartenant à chacun desdits ordinateurs (SRV1, SRV2) : module de processeur défectueux desdits ordinateurs (SRV1, SRV2), défaillance de l'ordinateur actif (SRV1, SRV2), défaillance d'un module de commande RAID (4), suspension du système d'exploitation, suspension de connexion, câble déconnecté, port de concentrateur défectueux, dysfonctionnement de l'application.

9. Système (100) selon la revendication 1, **caractérisé en ce que** chacun desdits ordinateurs (SRV1, SRV2) comporte une carte mère (1, 1'), une unité de traitement et de commande (2, 2'), une mémoire (3, 3'), un module de commande RAID (4, 4'), une interface LAN (5, 5') et une unité de puissance (6, 6').

10. Système (100) selon la revendication 1, **caractérisé en ce que** ledit bloc de stockage (9) comprend une pluralité de disques durs indépendants (HD1-HD8), chacun étant associé avec un module de commande respectif (EC1 - EC8), adapté pour permettre auxdits ordinateurs (SRV1, SRV2) d'accéder au disque dur respectif (HD1-HD8) de façon sélective.

11. Système (100) selon la revendication 1, **caractérisé par** le fait de comporter un châssis externe (20) adapté pour loger ledit premier ordinateur (SRV1) et ledit second ordinateur (SRV2), ledit module de stockage (9) et ledit module d'interconnexion (8).

12. Système (100) selon au moins l'une des revendications précédentes, **caractérisé en ce que** ledit premier ordinateur (SRV1) et ledit second ordinateur (SRV2) sont fournis à travers un serveur respectif.

13. Système (100) selon la revendication 12, **caractérisé par** le fait d'être adapté pour opérer dans au moins l'une des applications suivantes : Serveur de Fichier, Serveur d'Application, Serveur de Messagerie, Serveur d'Arrière-plan, Traitement en Parallèle Frontal, Sécurité Internet, Vidéo Surveillance, Serveur de Stockage et CTI (Couplage Téléphonie Informatique).

14. Système selon l'une quelconque des revendications précédentes, **caractérisé en ce que** ledit premier ordinateur (SRV1) et ledit second ordinateur (SRV2) sont dotés d'un système de signalisation respectif, en particulier de LED (diodes électroluminescentes), adaptées pour permettre à un utilisateur dudit système de reconnaître l'état de fonctionnement dudit premier ordinateur (SRV1) et dudit second ordinateur (SRV2).
